# EUROPÄISCHE PATENTSCHRIFT

(11) **EP 3 787 954 B1**
(45) Veröffentlichungstag und Bekanntmachung des Hinweises auf die Patenterteilung: **11.05.2022**
(21) Anmeldenummer: 19729635.3
(22) Anmeldetag: 23.05.2019
(51) Int. Cl.: B61L 27/00, B61L 15/00

(54) **VERFAHREN UND VORRICHTUNG ZUM PROTOKOLLIEREN EINER EIN SCHIENENFAHRZEUG BETREFFENDEN INFORMATION**
METHOD AND DEVICE FOR LOGGING AN ITEM OF INFORMATION RELATING TO A RAIL VEHICLE
PROCÉDÉ ET DISPOSITIF POUR CONSIGNER UNE INFORMATION CONCERNANT UN VÉHICULE FERROVIAIRE

(30) Priorität: 12.06.2018 DE 102018209308
(43) Veröffentlichungstag der Anmeldung: 10.03.2021
(73) Patentinhaber: Siemens Mobility GmbH, 81739 München (DE)
(72) Erfinder: LOHNEIS, Georg, 96250 Ebensfeld (DE)
(86) Internationale Anmeldenummer: PCT/EP2019/063349
(87) Internationale Veröffentlichungsnummer: WO 2019/238380

(56) Entgegenhaltungen:
- WO-A1-00/35732
- US-A1- 2005 171 661
- US-A1- 2008 164 380
- US-A1- 2016 194 014
- US-A1- 2018 086 357

## Beschreibung

Die Erfindung betrifft ein Verfahren und eine Vorrichtung zum Protokollieren einer ein Schienenfahrzeug betreffenden Information. Die Erfindung betrifft ferner ein Schienenfahrzeug sowie ein Computerprogramm.

Es ist bekannt, dass Übergabemitteilungen für einen Triebfahrzeugführer bzw. Mängel am Triebfahrzeug händisch in ein Übergabebuch eingetragen und in Papierform an eine Servicestelle weitergeleitet werden.

Weiterhin ist bekannt, dass eine händische Auswahl von Mängeln aus einer Liste an einem Bildschirm durchgeführt werden kann.

Diese Formen der Übergabemitteilungen sind sehr zeitaufwendig.

Die Offenlegungsschrift DE 10 2013 108 627 A1 offenbart ein sprachgesteuertes Kommunikationssystem.

Aus der Druckschrift WO 00/35732 ist ein interaktives Fehlermeldesystem bekannt, mit dem Geräteprobleme und Reparaturen behandelt werden. Dabei meldet das Bordpersonal Geräteprobleme über ein Telefon an ein System. Nach dem Aufruf des Systems beschreibt das Bordpersonal das Problem in eigenen Worten. Das computergestützte Berichtssystem weist dem Bericht und allen nachfolgenden Reparaturen eine eindeutige Trouble Ticket-Nummer zu.

Die der Erfindung zugrunde liegende Aufgabe ist darin zu sehen, ein Konzept zum effizienten Protokollieren einer ein Schienenfahrzeug betreffenden Information bereitzustellen.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem ersten Aspekt wird ein Verfahren zum Protokollieren einer ein Schienenfahrzeug betreffenden Information bereitgestellt, umfassend die folgenden Schritte:
Aufzeichnen einer die Information umfassenden Sprachmitteilung eines Nutzers des Schienenfahrzeugs,
Speichern der aufgezeichneten Sprachmitteilung als eine Audiodatei und
Senden der gespeicherten Audiodatei über ein drahtloses Kommunikationsnetzwerk an einen vom Schienenfahrzeug entfernten Teilnehmer des Kommunikationsnetzwerks.

Nach einem zweiten Aspekt wird eine Vorrichtung zum Protokollieren einer ein Schienenfahrzeug betreffenden Information bereitgestellt, umfassend:
eine akustische Aufzeichnungseinrichtung zum Aufzeichnen einer die Information umfassenden Sprachmitteilung eines Nutzers des Schienenfahrzeugs,
einen elektronischen Speicher zum Speichern der aufgezeichneten Sprachmitteilung als eine Audiodatei und
eine Kommunikationsschnittstelle zum Übermitteln der gespeicherten Audiodatei über ein drahtloses Kommunikationsnetzwerk an einen vom Schienenfahrzeug entfernten Teilnehmer des Kommunikationsnetzwerks.

Gemäß einem dritten Aspekt wird ein Schienenfahrzeug bereitgestellt, welches die Vorrichtung gemäß dem zweiten Aspekt umfasst.

Nach einem vierten Aspekt wird ein Computerprogramm bereitgestellt, welches Programmcode zur Durchführung des Verfahrens gemäß dem ersten Aspekt umfasst, wenn das Computerprogramm auf einem Computer, beispielsweise auf der Vorrichtung gemäß dem zweiten Aspekt, ausgeführt wird.

Die Erfindung basiert auf der Erkenntnis, dass die obige Aufgabe dadurch gelöst werden kann, dass eine ein Schienenfahrzeug betreffende Information nicht mehr händisch in ein Übergabebuch eingetragen wird, sondern diktiert und aufgezeichnet wird.

Dadurch wird z.B. der technische Vorteil bewirkt, dass eine solche Information schneller und effizienter protokolliert werden kann.

Durch das Senden der gespeicherten Audiodatei, die die aufgezeichnete Sprachmitteilung umfasst, über das drahtlose Kommunikationsnetzwerk an den entfernten Teilnehmer wird z.B. der technische Vorteil bewirkt, dass dem entfernten Teilnehmer die Information effizient und schnell zur Verfügung gestellt werden kann.

Ein zeitlicher Aufwand für ein händisches Übermitteln eines Übergabebuchs an eine Servicestelle entfällt somit.

Somit wird also der technische Vorteil bewirkt, dass ein Konzept zum effizienten Protokollieren einer ein Schienenfahrzeug betreffenden Information bereitgestellt ist.

Eine Information im Sinne der Beschreibung umfasst eine Übergabemitteilung für einen Schienenfahrzeugführer, beispielsweise einen Triebfahrzeugführer.

Eine Information im Sinne der Beschreibung umfasst z.B. ein oder mehrere Mängel am Schienenfahrzeug.

Ein drahtloses Kommunikationsnetzwerk umfasst gemäß einer Ausführungsform ein Mobilfunknetz und/oder ein WLAN-Kommunikationsnetzwerk.

Ein Schienenfahrzeug im Sinne der Beschreibung ist z.B. motorisiert oder unmotorisiert.

Ein Schienenfahrzeug ist z.B. eines der folgenden Schienenfahrzeuge: Lokomotive, Triebzug, Triebfahrzeug, Triebwagen, Waggon und Schienenfahrrad.

Erfindungsgemäß wird vor dem Speichern geprüft, ob die aufgezeichnete Sprachmitteilung zumindest ein vorbestimmtes Schlüsselwort umfasst, wobei, wenn die aufgezeichnete Sprachmitteilung nicht das zumindest eine vorbestimmte Schlüsselwort umfasst, ein Hinweis an den Nutzer ausgegeben wird, dass das zumindest eine vorbestimmte Schlüsselwort in der aufgezeichneten Sprachmitteilung fehlt.

Dadurch wird z.B. der technische Vorteil bewirkt, dass effizient sichergestellt werden kann, dass die gespeicherte Audiodatei zumindest ein Minimum an Informationen enthält. Dies wird insbesondere über eine Auswahl von geeigneten Schlüsselwörtern bewirkt.

Weiter wird dadurch der technische Vorteil bewirkt, dass der Nutzer effizient daran erinnert wird, falls er vergessen haben sollte, bestimmte Informationen betreffend dem Schienenfahrzeug zu protokollieren.

Nach einer Ausführungsform ist vorgesehen, dass nach dem Ausgeben des Hinweises auf eine Nutzereingabe gewartet wird, ob der Nutzer die bereits aufgezeichnete Sprachmitteilung ohne das zumindest eine vorbestimmte Schlüsselwort speichern will oder ob der Nutzer vor dem Speichern die bereits aufgezeichnete Sprachmitteilung ergänzen will, wobei bei Erfassung einer entsprechenden Nutzereingabe entweder eine die bereits aufgezeichnete Sprachmitteilung ergänzende Sprachmitteilung des Nutzers aufgezeichnet wird, wobei die bereits aufgezeichnete und die aufgezeichnete ergänzende Sprachmitteilung als die Audiodatei gespeichert werden, oder die bereits aufgezeichnete Sprachmitteilung ohne das zumindest eine vorbestimmte Schlüsselwort als die Audiodatei gespeichert wird.

Dadurch wird z.B. der technische Vorteil bewirkt, dass dem Nutzer Gelegenheit gegeben wird, die bereits protokollierten Informationen durch weitere Informationen zu ergänzen.

Gemäß einer Ausführungsform ist vorgesehen, dass das zumindest eine vorbestimmte Schlüsselwort aus der folgenden Gruppe von Schlüsselwörtern ausgewählt wird: Betriebsmittelkennzeichen, Ortskennzeichen, Baugruppe, Mängelcode.

Dadurch wird z.B. der technische Vorteil bewirkt, dass sichergestellt wird, dass besonders wichtige Informationen protokolliert werden.

In einer Ausführungsform kennzeichnet ein Betriebsmittelkennzeichen eines der folgenden Elemente: Drehgestell, Führerraum bzw. Führerstand.

In einer Ausführungsform kennzeichnet ein Ortskennzeichen eines der folgenden Elemente: Fahrwerk, Fahrzeuginneneinrichtung.

In einer Ausführungsform kennzeichnet eine Baugruppe eines der folgenden Elemente: Radsystem, Führersitz.

Allgemein kennzeichnet ein Betriebsmittelkennzeichen dasjenige Betriebsmittel des Schienenfahrzeugs, welches einen Mangel aufweist.

Allgemein kennzeichnet ein Ortskennzeichen denjenigen Ort, an welches sich das Betriebsmittel aufweisend einen Mangel befindet.

Allgemein kennzeichnet eine Baugruppe diejenige Baugruppe des Betriebsmittel aufweisend einen Mangel, welches den Mangel aufweist.

In einer Ausführungsform wird dem vorbestimmten Schlüsselwort jeweils ein bestimmter Code, zum Beispiel ein alphanummerischer Code, zugeordnet. Die Zuordnung erfolgt gemäß einer Ausführungsform gemäß der Norm DIN EN 15380 Ausgabe Juni 2006 und/oder gemäß einer vorbestimmten Mängelcodeliste, , beispielsweise einer betriebsinternen Mängelcodeliste, beispielsweise einer Mängelcodeliste der Anmelderin, also der Siemens AG.

Der bestimmte Code ist also zum Beispiel ein Code gemäß einer vorbestimmten Mängelcodeliste, beispielsweise einer betriebsinternen Mängelcodeliste, beispielsweise einer Mängelcodeliste der Anmelderin, also der Siemens AG.

Das heißt also insbesondere, dass die Kennzeichnung zum Beispiel jeweils nach der Norm DIN EN 15380 Ausgabe Juni 2006 und/oder basierend auf der vorbestimmten Mängelcodeliste erfolgt.

Derjenige Code, welcher den Mangel kennzeichnet, ist also gemäß einer Ausführungsform ein Code aus einer vorbestimmten Mängelcodeliste, beispielsweise einer betriebsinternen Mängelcodeliste, beispielsweise einer Mängelcodeliste der Anmelderin, also der Siemens AG, insofern die Norm DIN EN 15380 Ausgabe Juni 2006 keinen Code umfasst, welcher einem Mangel zugeordnet ist.

Folgende Beispiel sollen die Kennzeichnung beispielhaft erläutern:

### Beispiel 1:

### Mangel: Probleme am Fahrwerk mit der Radlagerung:

Nach Norm DIN EN 15380 Ausgabe Juni 2006:
Drehgestell: 71 (Code gemäß DIN EN 15380 Ausgabe Juni 2006)
Fahrwerk: E (Code gemäß DIN EN 15380 Ausgabe Juni 2006)
Radsystem: C (Code gemäß DIN EN 15380 Ausgabe Juni 2006)
Radlagerung defekt: Interner Mängelcode 2345 (interner Code der Siemens AG einer betriebsinternen Mängelcodeliste)

Spracheingabe:

### Drehgestell Fahrwerk Radsystem Radlagerung defekt

Es wird überprüft, ob die der Spracheingabe entsprechende aufgezeichnete Sprachmitteilung ein Betriebsmittelkennzeichen (Drehgestell), ein Ortskennzeichen (Fahrwerk), eine Baugrupppe (Radsystem), Mängelcode (Radlagerung defekt) umfasst. Sofern ja, wird die aufgezeichnete Sprachmitteilung als Audiodatei gespeichert und an einen entfernten Teilnehmer (Landseite bezogen auf das Schienenfahrzeug) über ein drahtloses Kommunikationsnetzwerk gesendet. Sofern nein, wird ein Hinweis, zum Beispiel ein akustischer und/oder ein visueller Hinweis, ausgegeben, dass ein oder mehrere vorbestimmte Schlüsselwörter fehlen. Der Nutzer hat nun die Möglichkeit, die fehlenden Schlüsselwörter über eine weitere Spracheingabe einzugeben, um die bereits aufgezeichnete Sprachmitteilung zu ergänzen.

Die vom entfernten Teilnehmer empfangene Audiodatei wird weiterverarbeitet. Zum Beispiel ist vorgesehen, dass die Schlüsselwörter auf der Landseite, also zum Beispiel vom entfernten Teilnehmer, in folgenden Code gemäß DIN EN 15380 Ausgabe Juni 2006 umgewandelt werden: 71 E C 2345.

### Beispiel 2:

### Mangel: Sitz im Führerstand defekt

Nach Norm DIN EN 15380 Ausgabe Juni 2006:
Führerraum: 10 (Code gemäß DIN EN 15380 Ausgabe Juni 2006) Fahrzeuginneneinrichtung: D (Code gemäß DIN EN 15380 Ausgabe Juni 2006)
Führersitz: C (Code gemäß DIN EN 15380 Ausgabe Juni 2006) Führersitz defekt: interner Mängelode 5678 (interner Code der Siemens AG einer betriebsinternen Mängelcodeliste)

### Spracheingabe:

### Führerraum Fahrzeuginneneinrichtung Führersitz defekt

Es wird überprüft, ob die der Spracheingabe entsprechende aufgezeichnete Sprachmitteilung ein Betriebsmittelkennzeichen (Führerraum), ein Ortskennzeichen (Fahrzeuginneneinrichtung), eine Baugrupppe (Führersitz), Mängelcode (Führersitz defekt) umfasst. Sofern ja, wird die aufgezeichnete Sprachmitteilung als Audiodatei gespeichert und an einen entfernten Teilnehmer (Landseite bezogen auf das Schienenfahrzeug) über ein drahtloses Kommunikationsnetzwerk gesendet. Sofern nein, wird ein Hinweis, zum Beispiel ein akustischer und/oder ein visueller Hinweis, ausgegeben, dass ein oder mehrere vorbestimmte Schlüsselwörter fehlen. Der Nutzer hat nun die Möglichkeit, die fehlenden Schlüsselwörter über eine weitere Spracheingabe einzugeben, um die bereits aufgezeichnete Sprachmitteilung zu ergänzen.

Die vom entfernten Teilnehmer empfangene Audiodatei wird weiterverarbeitet. Zum Beispiel ist vorgesehen, dass die Schlüsselwörter auf der Landseite, also zum Beispiel vom entfernten Teilnehmer, in folgenden Code gemäß DIN EN 15380 Ausgabe Juni 2006 umgewandelt werden: 10 E C 5678.

Das heißt also insbesondere, dass der Nutzer nicht mehr den Code gemäß DIN EN 15380 Ausgabe Juni 2006 sowie Code einer vorbestimmten Mängelcodeliste, beispielsweise einer betriebsinternen Mängelcodeliste, eingeben muss. Es reicht, wenn er die einzelnen Schlüsselwörter sprachlich eingibt. Diese werden dann automatisch, zum Beispiel vom entfernten Teilnehmer, in den Code gemäß DIN EN 15380 Ausgabe Juni 2006 sowie gemäß der vorbestimmten Mängelcodeliste umgewandelt. Dies ist insofern effizienter, schneller und einfacher, als dass sich die Schlüsselwörter einfacher merken lassen, als alphanummerischer Code gemäß DIN EN 15380 Ausgabe Juni 2006 sowie gemäß der vorbestimmten Mängelcodeliste.

Gemäß einer Ausführungsform ist vorgesehen, dass das Aufzeichnen der Sprachmitteilung erst ansprechend auf eine Erfassung eines Aufzeichnenstartbefehls des Nutzers gestartet wird und/oder wobei das Aufzeichnen der Sprachmitteilung erst ansprechend auf eine Erfassung eines Aufzeichnenstoppbefehls des Nutzers beendet wird.

Dadurch wird z.B. der technische Vorteil bewirkt, dass das Starten respektive das Beenden der Aufzeichnung der Sprachmitteilung effizient durchgeführt werden können.

Insbesondere wird dadurch der technische Vorteil bewirkt, dass die Sprachmitteilung erst dann gestartet respektive dass die Sprachmitteilung erst dann gestoppt wird, wenn der Nutzer einen entsprechenden Befehl gibt.

Ein solcher Aufzeichnenstartbefehl respektive ein solcher Aufzeichnenstoppbefehl umfasst z.B. einen akustischen Aufzeichnenstartbefehl respektive einen akustischen Aufzeichnenstoppbefehl.

Das heißt also insbesondere, dass der Nutzer über eine Sprachsteuerung das Aufzeichnen starten respektive beenden kann.

In einer anderen Ausführungsform ist vorgesehen, dass das Starten der Aufzeichnung respektive das Beenden der Aufzeichnung ansprechend auf eine Erfassung einer Eingabe an einem berührungsempfindlichen Bildschirm durchgeführt wird.

In einer anderen Ausführungsform ist vorgesehen, dass eine Schienenfahrzeugkennung und/oder eine Nutzerkennung und/oder ein Speicherdatum der gespeicherten Audiodatei an den Teilnehmer über das drahtlose Kommunikationsnetzwerk gesendet werden.

Dadurch wird z.B. der technische Vorteil bewirkt, dass die vom Teilnehmer empfangene Audiodatei effizient dem Schienenfahrzeug respektive dem Nutzer zugeordnet werden kann. Insbesondere wird dadurch der technische Vorteil bewirkt, dass die vom Teilnehmer empfangene Audiodatei effizient einem Zeitpunkt der Speicherung bzw. Erstellung der Audiodatei zugeordnet werden kann.

Gemäß einer Ausführungsform ist vorgesehen, dass vor dem Senden der gespeicherten Audiodatei an den entfernten Teilnehmer die Schienenfahrzeugkennung und/oder die Nutzerkennung und/oder das Speicherdatum der gespeicherten Audiodatei zugeordnet bzw. mit dieser verknüpft werden.

Die entsprechend verknüpfte Audiodatei wird dann gemäß einer Ausführungsform anschließend an den entfernten Teilnehmer gesendet.

Nach einer Ausführungsform ist vorgesehen, dass die gespeicherte Audiodatei erst ansprechend auf eine Erfassung einer Bestätigung des Nutzers, dass die gespeicherte Audiodatei gesendet werden soll, gespeichert wird.

Dadurch wird z.B. der technische Vorteil bewirkt, dass der Nutzer vor dem Senden der Audiodatei nochmals Gelegenheit hat, die gespeicherte Audiodatei zu bearbeiten.

In einer Ausführungsform ist vorgesehen, dass basierend auf der mittels des Teilnehmers empfangenen Audiodatei ein elektronischer Arbeitszettel generiert wird.

Dadurch wird z.B. der technische Vorteil bewirkt, dass das Schienenfahrzeug unter Verwendung des elektronischen Arbeitszettels effizient gewartet werden kann.

In einer Ausführungsform ist vorgesehen, dass der elektronische Arbeitszettel mit der empfangenen Audiodatei verknüpft wird.

Dadurch wird z.B. der technische Vorteil bewirkt, dass ein Servicetechniker eine Möglichkeit hat, während einer Wartung bzw. Reparatur des Schienenfahrzeugs sich die Aufzeichnung anzuhören, beispielsweise unter Verwendung eines Computers.

Nach einer Ausführungsform ist vorgesehen, dass die Vorrichtung zum Protokollieren einer ein Schienenfahrzeug betreffenden Information ausgebildet oder eingerichtet ist, das Verfahren zum Protokollieren einer ein Schienenfahrzeug betreffenden Information aus- oder durchzuführen.

Gemäß einer Ausführungsform ist vorgesehen, dass das Verfahren zum Protokollieren einer ein Schienenfahrzeug betreffenden Information mittels der Vorrichtung zum Protokollieren einer ein Schienenfahrzeug betreffenden Information aus- oder durchgeführt wird.

Gemäß einer Ausführungsform ist vorgesehen, dass das Schienenfahrzeug ausgebildet oder eingerichtet ist, das Verfahren zum Protokollieren einer ein Schienenfahrzeug betreffenden Information aus- oder durchzuführen.

Technische Funktionalitäten der Vorrichtung ergeben sich analog aus entsprechenden technischen Funktionalitäten des Verfahrens und umgekehrt.

Das heißt also insbesondere, dass sich Vorrichtungsmerkmale aus entsprechenden Verfahrensmerkmalen und umgekehrt ergeben.

Gemäß einer Ausführungsform ist vorgesehen, dass die Vorrichtung einen Audiorecorder umfasst, welcher die akustische Aufzeichnungseinrichtung und den elektronischen Speicher umfasst.

Nach einer Ausführungsform ist die Vorrichtung ein mobiles Endgerät, beispielsweise ein Mobiltelefon.

In einer Ausführungsform umfasst die akustische Aufzeichnungseinrichtung ein oder mehrere Mikrofone.

Nach einer Ausführungsform ist ein Prozessor vorgesehen, der ausgebildet ist, vor dem Speichern zu prüfen, ob die aufgezeichnete Sprachmitteilung zumindest ein vorbestimmtes Schlüsselwort umfasst.

Gemäß einer Ausführungsform ist ein Hinweisgeber vorgesehen, welcher ausgebildet ist, einen Hinweis an den Nutzer auszugeben, dass das zumindest eine vorbestimmte Schlüsselwort in der aufgezeichneten Sprachmitteilung fehlt, wenn die aufgezeichnete Sprachmitteilung nicht das zumindest eine vorbestimmte Schlüsselwort umfasst.

Gemäß einer Ausführungsform umfasst der Hinweisgeber einen Bildschirm und/oder einen oder mehrere Lautsprecher.

Der Hinweis umfasst somit z.B. einen akustischen Hinweis und/oder einen visuellen Hinweis.

Nach einer Ausführungsform ist vorgesehen, dass der Prozessor ausgebildet ist, nach dem Ausgeben des Hinweises auf eine Nutzereingabe zu warten, ob der Nutzer die bereits aufgezeichnete Sprachmitteilung ohne das zumindest eine vorbestimmte Schlüsselwort speichern will oder ob der Nutzer vor dem Speichern die bereits aufgezeichnete Sprachmitteilung ergänzen will, wobei eine Mensch-Maschinen-Schnittstelle vorgesehen ist, die ausgebildet ist, eine Nutzereingabe zu erfassen, wobei bei Erfassung einer entsprechenden Nutzereingabe mittels der Mensch-Maschinen-Schnittstelle die Aufzeichnungseinrichtung eine die bereits aufgezeichnete Sprachmitteilung ergänzende Sprachmitteilung des Nutzers aufzeichnet, wobei der Speicher ausgebildet ist, die bereits aufgezeichnete und die aufgezeichnete ergänzende Sprachmitteilung als die Audiodatei zu speichern, wobei bei Erfassung einer entsprechenden Nutzereingabe mittels der Mensch-Maschinen-Schnittstelle der Speicher ausgebildet ist, die bereits aufgezeichnete Sprachmitteilung ohne das zumindest eine vorbestimmte Schlüsselwort als die Audiodatei zu speichern.

Nach einer Ausführungsform ist vorgesehen, dass die Aufzeichnungseinrichtung ausgebildet ist, das Aufzeichnen der Sprachmitteilung erst ansprechend auf eine Erfassung eines Aufzeichnenstartbefehls des Nutzers zu starten und/oder das Aufzeichnen der Sprachmitteilung erst ansprechend auf eine Erfassung eines Aufzeichnenstoppbefehls zu beenden.

Gemäß einer Ausführungsform ist eine Mensch-Maschinen-Schnittstelle vorgesehen, die ausgebildet ist, einen Aufzeichnenstartbefehl und/oder einen Aufzeichnenstoppbefehl des Nutzers zu erfassen.

Die Mensch-Maschinen-Schnittstelle umfasst gemäß einer Ausführungsform einen berührungsempfindlichen Bildschirm und/oder ein Mikrofon.

Gemäß einer Ausführungsform ist vorgesehen, dass die Kommunikationsschnittstelle ausgebildet ist, eine Schienenfahrzeugkennung und/oder eine Nutzerkennung und/oder ein Speicherdatum der gespeicherten Audiodatei einem Teilnehmer über das drahtlose Kommunikationsnetzwerk zu senden.

Gemäß einer Ausführungsform ist vorgesehen, dass der Speicher ausgebildet ist, die gespeicherte Audiodatei erst ansprechend auf eine Erfassung einer Bestätigung des Nutzers, dass die gespeicherte Audiodatei gesendet werden soll, zu speichern.

Das Erfassen der Bestätigung des Nutzers, dass die gespeicherte Audiodatei gesendet werden soll, wird gemäß einer Ausführungsform mittels der Mensch-Maschinen-Schnittstelle durchgeführt.

Gemäß einer Ausführungsform ist vorgesehen, dass der Teilnehmer ausgebildet ist, basierend auf der empfangenen Audiodatei einen elektronischen Arbeitszettel zu generieren.

Gemäß einer Ausführungsform ist vorgesehen, dass der Teilnehmer ausgebildet ist, den elektronischen Arbeitszettel mit der empfangenen Audiodatei zu verknüpfen.

Die Formulierung "respektive" umfasst insbesondere die Formulierung "und/oder".

In einer Ausführungsform ist vorgesehen, dass der Teilnehmer ausgebildet ist, die empfangene Audiodatei in eine Textdatei umzuwandeln.

In einer Ausführungsform umfasst das Schienenfahrzeug einen Führerstand.

In einer Ausführungsform ist die Aufzeichnungseinrichtung innerhalb des Führerstands angeordnet.

In einer Ausführungsform ist der Speicher innerhalb des Führerstands angeordnet.

In einer Ausführungsform ist der Bildschirm, beispielsweise der berührungsempfindliche Bildschirm, innerhalb des Führerstands angeordnet.

In einer Ausführungsform ist die Kommunikationsschnittstelle innerhalb des Führerstands angeordnet.

In einer Ausführungsform ist die Vorrichtung innerhalb des Führerstands angeordnet.

In einer Ausführungsform ist vorgesehen, dass das Aufzeichnen der ergänzenden Sprachmitteilung erst ansprechend auf eine Erfassung eines weiteren Aufzeichnenstartbefehls des Nutzers gestartet wird und/oder wobei das Aufzeichnen der ergänzenden Sprachmitteilung erst ansprechend auf eine Erfassung eines weiteren Aufzeichnenstoppbefehls des Nutzers beendet wird.

Das Erfassen des weiteren Aufzeichnenstartbefehls respektive das Erfassen des weiteren Aufzeichnenstoppbefehls wird gemäß einer Ausführungsform mittels der Mensch-Maschinen-Schnittstelle durchgeführt.

Ausführungen im Zusammenhang mit dem Aufzeichnenstartbefehl und dem Aufzeichnenstoppbefehl gelten analog für den weiteren Aufzeichnenstartbefehl und den weiteren Aufzeichnenstoppbefehl.

In einer Ausführungsform ist der entfernte Teilnehmer von einer Servicestation für Schienenfahrzeuge oder von einer Werkstatt für Schienenfahrzeuge umfasst.

Der entfernte Teilnehmer befindet sich auf einer Landseite bezogen auf das Schienenfahrzeug.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei
- FIG 1: ein Ablaufdiagramm eines Verfahrens zum Protokollieren einer ein Schienenfahrzeug betreffenden Information,
- FIG 2: eine Vorrichtung zum Protokollieren einer ein Schienenfahrzeug betreffenden Information,
- FIG 3: ein Schienenfahrzeug und
- FIG 4: eine weitere Vorrichtung zum Protokollieren einer ein Schienenfahrzeug betreffenden Information
zeigen.

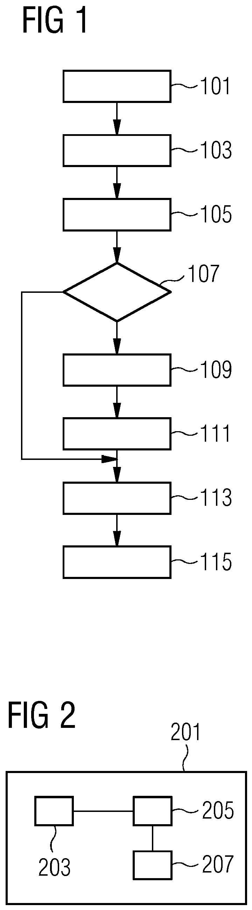

FIG 1 zeigt ein Ablaufdiagramm eines Verfahrens zum Protokollieren einer ein Schienenfahrzeug betreffenden Information.

Gemäß einem Schritt 101 ist vorgesehen, dass ein Aufzeichnenstartbefehl eines Nutzers mittels einer Mensch-Maschinen-Schnittstelle, beispielsweise mittels eines Mikrofons und/oder eines berührungsempfindlichen Bildschirms, erfasst wird.

Ansprechend auf die Erfassung gemäß dem Schritt 101 ist gemäß einem Schritt 103 vorgesehen, dass ein Aufzeichnen einer die Information umfassenden Sprachmitteilung des Nutzers des Schienenfahrzeugs gestartet wird und dass die Sprachmitteilung des Nutzers aufgezeichnet wird.

Gemäß einem Schritt 105 ist vorgesehen, dass mittels der Mensch-Maschinen-Schnittstelle ein Aufzeichnenstoppbefehl des Nutzers erfasst wird, wobei ansprechend auf diesen Befehl das Aufzeichnen der Sprachmitteilung beendet oder gestoppt wird.

In einem Schritt 107 ist vorgesehen, dass vor einem Speichern der aufgezeichneten Sprachmitteilung als eine Audiodatei geprüft wird, ob die aufgezeichnete Sprachmitteilung zumindest ein vorbestimmtes Schlüsselwort oder mehrere vorbestimmte Schlüsselwörter umfasst.

Hierfür wird z.B. eine Spracherkennung oder Sprachanalyse der aufgezeichneten Sprachmitteilung durchgeführt.

Wenn das Prüfen gemäß dem Schritt 107 ergeben hat, dass die aufgezeichnete Sprachmitteilung nicht das zumindest eine vorbestimmte Schlüsselwort umfasst, wird gemäß einem Schritt 109 ein Hinweis, beispielsweise mittels der Mensch-Maschinen-Schnittstelle, an den Nutzer ausgegeben, dass das zumindest eine vorbestimmte Schlüsselwort in der aufgezeichneten Sprachmitteilung fehlt.

Zum Beispiel wird ein visueller Hinweis mittels eines Bildschirms, beispielsweise mittels eines berührungsempfindlichen Bildschirms, ausgegeben.

Beispielsweise wird ein akustischer Hinweis über einen oder mehrere Lautsprecher ausgegeben.

Gemäß einem Schritt 111 ist vorgesehen, dass eine die bereits aufgezeichnete Sprachmitteilung ergänzende Sprachmitteilung des Nutzers aufgezeichnet wird.

Dieses Aufzeichnen gemäß dem Schritt 111 kann analog zum Aufzeichnen gemäß dem Schritt 103 unter Verwendung eines weiteren Aufzeichnenstartbefehls des Nutzers gestartet werden und/oder unter Verwendung eines weiteren Aufzeichnenstoppbefehls des Nutzers beendet werden.

Die bereits erfasste Sprachmitteilung und die ergänzende Sprachmitteilung werden anschließend gemäß einem Schritt 113 in einen elektronischen Speicher gespeichert.

Sofern die Prüfung gemäß dem Schritt 107 ergeben hat, dass die bereits aufgezeichnete Sprachmitteilung das zumindest eine vorbestimmte Schlüsselwort enthält, wird die bereits aufgezeichnete Sprachmitteilung als die Audiodatei in den elektronischen Speicher gemäß dem Schritt 113 gespeichert.

Die in dem elektronischen Speicher gespeicherte Audiodatei wird gemäß einem Schritt 115 über ein drahtloses Kommunikationsnetzwerk an einen vom Schienenfahrzeug entfernten Teilnehmer des Kommunikationsnetzwerks gesendet.

In einer Ausführungsform ist der entfernte Teilnehmer von einer Servicestation für Schienenfahrzeuge oder von einer Werkstatt für Schienenfahrzeuge umfasst.

FIG 2 zeigt eine Vorrichtung 201 zum Protokollieren einer ein Schienenfahrzeug betreffenden Information, umfassend:
eine akustische Aufzeichnungseinrichtung 203 zum Aufzeichnen einer die Information umfassenden Sprachmitteilung eines Nutzers des Schienenfahrzeugs,
einen elektronischen Speicher 205 zum Speichern der aufgezeichneten Sprachmitteilung als eine Audiodatei und eine Kommunikationsschnittstelle 207 zum Übermitteln der gespeicherten Audiodatei über ein drahtloses Kommunikationsnetzwerk an einen vom Schienenfahrzeug entfernten Teilnehmer des Kommunikationsnetzwerks.

In einer Ausführungsform umfasst die Vorrichtung 201 einen Prozessor, der ausgebildet ist, eine Sprachanalyse der aufgezeichneten respektive der weiteren aufgezeichneten Sprachmitteilung durchzuführen. Basierend auf dieser Sprachanalyse wird mittels des Prozessors z.B. geprüft, ob die aufgezeichnete Sprachmitteilung respektive die ergänzende Sprachmitteilung das zumindest eine Schlüsselwort oder die mehreren vorbestimmten Schlüsselwörter umfasst.

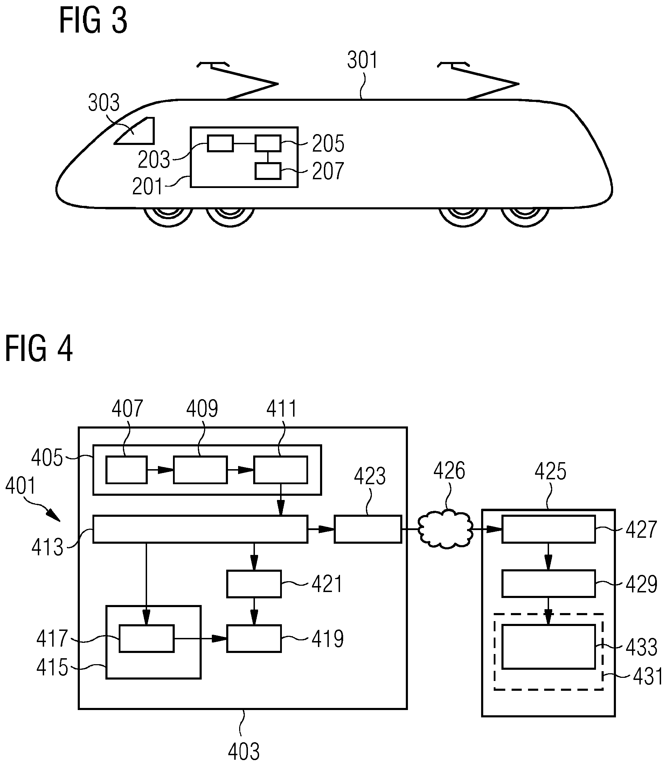

FIG 3 zeigt ein Schienenfahrzeug 301.

Das Schienenfahrzeug 301 umfasst einen Führerstand 303.

Das Schienenfahrzeug 301 umfasst ferner die Vorrichtung 201 gemäß FIG 2.

In einer Ausführungsform ist die akustische Aufzeichnungseinrichtung 203 innerhalb des Führerstands 303 angeordnet.

In einer Ausführungsform ist der elektronische Speicher 205 innerhalb des Führerstands 303 angeordnet.

In einer Ausführungsform ist der Prozessor innerhalb des Führerstands 303 angeordnet.

FIG 4 zeigt eine weitere Vorrichtung 401 zum Protokollieren einer ein Schienenfahrzeug betreffenden Information.

Die Vorrichtung 401 ist von einem Schienenfahrzeug 403 umfasst, welches lediglich durch ein Viereck symbolisch dargestellt ist.

In einer nicht gezeigten Ausführungsform ist die Vorrichtung 401 auch ohne das Schienenfahrzeug 403 offenbart.

Die Vorrichtung 401 umfasst eine akustische Aufzeichnungseinrichtung 405 zum Aufzeichnen einer die Information umfassenden Sprachmitteilung eines Nutzers des Schienenfahrzeugs 403.

Die Aufzeichnungseinrichtung 405 umfasst ein Mikrofon 407 zum Erfassen der Sprachmitteilung.

Die Aufzeichnungseinrichtung 405 umfasst ferner einen Prozessor 409 zum Durchführen einer Spracherkennung der aufgezeichneten Sprachmitteilung. Somit kann beispielsweise die aufgezeichnete Sprachmitteilung dahingehend geprüft werden, ob diese ein oder mehrere vorbestimmte Schlüsselwörter umfasst.

Die aufgezeichnete Sprachmitteilung, in FIG 4 symbolisch durch ein Viereck mit dem Bezugszeichen 411 gekennzeichnet, wird in einen elektronischen Speicher 413 als eine Audiodatei gespeichert. Der Speicher 413 ist von der Vorrichtung 401 umfasst.

In einer Ausführungsform umfasst die Vorrichtung 401 einen Audiorecorder, der die Aufzeichnungseinrichtung 405 und den Speicher 413 umfasst.

Die Vorrichtung 401 umfasst ferner einen Bildschirm 415, der beispielsweise ein berührungsempfindlicher Bildschirm ist.

Der Bildschirm 415 kann beispielsweise die Audiodatei anzeigen, beispielsweise einen Dateinamen der Audiodatei anzeigen.

Dieses Anzeigen ist symbolisch in FIG 4 mit einem Viereck mit dem Bezugszeichen 417 dargestellt.

Weiter ist im Fall eines berührungsempfindlichen Bildschirms ermöglicht, die Audiodatei direkt am Bildschirm zu bearbeiten.

Beispielsweise kann die Audiodatei am Bildschirm ausgewählt oder gelöscht werden.

Die Vorrichtung 401 umfasst ferner einen Lautsprecher 419, über welchen die Audiodatei akustisch ausgegeben werden kann.

Zum Beispiel kann der Nutzer über einen berührungsempfindlichen Bildschirm die auszugebende Audiodatei, sofern beispielsweise im Speicher 413 mehrere Audiodateien gespeichert sind, auswählen, um sie über den Lautsprecher 419 akustisch wiederzugeben.

Über den Lautsprecher 419 kann weiter ein Hinweis, symbolisch gekennzeichnet durch ein Viereck mit dem Bezugszeichen 421, wiedergegeben werden, sofern die Prüfung durch den Prozessor 409 ergeben hat, dass die aufgezeichnete Sprachmitteilung nicht das zumindest eine vorbestimmte Schlüsselwort umfasst.

Die Vorrichtung 401 umfasst ferner eine Kommunikationsschnittstelle 423, die ausgebildet ist, über ein drahtloses Kommunikationsnetzwerk 426 zu kommunizieren.

Das Kommunikationsnetzwerk 426 ist in FIG 4 symbolisch durch ein Wolkensymbol dargestellt.

Die gespeicherte Audiodatei wird mittels der Kommunikationsschnittstelle 423 über das drahtlose Kommunikationsnetzwerk 426 an einen vom Schienenfahrzeug 403 entfernten Teilnehmer 425 des Kommunikationsnetzwerks 426 gesendet.

Der entfernte Teilnehmer 425 umfasst eine weitere Kommunikationsschnittstelle 427, mittels welcher die gesendete Audiodatei empfangen wird.

Der Teilnehmer 425 umfasst ferner einen weiteren Prozessor 429. Der weitere Prozessor 429 ist beispielsweise ausgebildet, die empfangene Audiodatei zu verarbeiten und/oder auszuwerten.

Die empfangene Audiodatei wird in einem weiteren elektronischen Speicher 431, der vom Teilnehmer 425 umfasst ist, gespeichert.

Die im elektronischen Speicher 431 gespeicherte Audiodatei ist in FIG 4 symbolisch mit einem Viereck mit dem Bezugszeichen 433 dargestellt.

In einer Ausführungsform werden der Audiodatei eine Schienenfahrzeugkennung und/oder eine Nutzerkennung und/oder ein Speicherdatum der gespeicherten Audiodatei zugeordnet, sodass diese Informationen gemeinsam mit der Audiodatei gespeichert werden.

Ein Speicherdatum im Sinne der Beschreibung umfasst insbesondere ein Datum und/oder eine Uhrzeit.

Der Teilnehmer 425 befindet sich also auf einer Landseite bezogen auf das Schienenfahrzeug 403.

Der Teilnehmer 425 ist beispielsweise von einer Servicestation für Schienenfahrzeuge respektive von einer Werkstatt für Schienenfahrzeuge umfasst.

Zusammenfassend basiert die Erfindung auf dem Gedanken, Übergabemitteilungen respektive Mängel am Schienenfahrzeug nicht mehr händisch in ein Übergabebuch einzutragen, sondern zu diktieren. Das heißt also, dass erfindungsgemäß ein Erfassen einer Spracheingabe bzw. einer entsprechenden Sprachmitteilung, die die Information betreffend dem Schienenfahrzeug umfasst, vorgesehen ist.

Ein Aufzeichnen der die Information umfassenden Sprachmitteilung wird gemäß einer Ausführungsform erst ansprechend auf eine Erfassung eines Aufzeichnenstartbefehls initiiert oder gestartet.

Die aufgezeichnete Sprachmitteilung wird gemäß einer Ausführungsform in einem elektronischen Speicher als eine Audiodatei gespeichert. Der elektronische Speicher ist gemäß einer Ausführungsform von einer Datenbank umfasst, die innerhalb des Schienenfahrzeugs angeordnet ist.

In einer Ausführungsform ist vorgesehen, dass das Aufzeichnen der Sprachmitteilung ansprechend auf eine Erfassung eines Aufzeichnenstoppbefehls beendet wird.

In einer Ausführungsform ist vorgesehen, dass, bevor die aufgezeichnete Sprachmitteilung gespeichert wird, geprüft wird, ob die aufgezeichnete Sprachmitteilung ein oder mehrere vorbestimmte Schlüsselwörter umfasst. Solche Schlüsselwörter sind z.B.: Betriebsmittelkennzeichen, Ortskennzeichen, Baugruppe und Mängelcode.

In einer Ausführungsform ist vorgesehen, dass, sofern nicht alle erwarteten, also vorbestimmten, Schlüsselwörter vorhanden sind, ein Hinweis als eine Audioausgabe über einen Lautsprecher ausgegeben wird. Dieser Lautsprecher befindet sich beispielsweise innerhalb eines Führerstands des Schienenfahrzeugs.

Der Schienenfahrzeugführer hat dann die Möglichkeit, die noch fehlenden Angaben bzw. Informationen über eine Spracheingabe bzw. Audioeingabe einzugeben, also zu ergänzen.

In einer Ausführungsform ist vorgesehen, dass die aufgezeichnete Sprachmitteilung ohne eine ergänzende Eingabe der noch fehlenden Schlüsselwörter erfolgt.

Die gespeicherte Audiodatei kann gemäß einer Ausführungsform an einem Bildschirm ausgewählt und über einen Lautsprecher ausgegeben werden.

In einer Ausführungsform kann die gespeicherte Audiodatei durch eine entsprechende Eingabe an einem berührungsempfindlichen Bildschirm gelöscht werden.

Die gespeicherte Audiodatei wird über ein drahtloses Kommunikationsnetzwerk zur Landseite übertragen, was dem Schritt des Sendens der gespeicherten Audiodatei an den entfernten Teilnehmer entspricht.

Auf der Landseite ist gemäß einer Ausführungsform vorgesehen, dass die gesendete Audiodatei in einem weiteren elektronischen Speicher gespeichert wird. Der weitere elektronische Speicher ist gemäß einer Ausführungsform von einer weiteren Datenbank umfasst.

Der im weiteren elektronischen Speicher gespeicherten Audiodatei werden z.B. eine Nutzerkennung und/oder eine Schienenfahrzeugkennung und/oder ein Speicherdatum zugeordnet.

In einer Ausführungsform ist die Nutzerkennung eine Schienenfahrzeugführerkennung.

In einer Ausführungsform ist vorgesehen, dass die mittels des entfernten Teilnehmers empfangene Audiodatei in eine Textdatei umgewandelt wird.

In einer Ausführungsform ist vorgesehen, dass für eine Wartung respektive eine Reparatur des Schienenfahrzeugs aus der mittels des Teilnehmers empfangenen Audiodatei ein elektronischer Arbeitszettel generiert wird.

In einer Ausführungsform ist vorgesehen, dass der elektronische Arbeitszettel mit der mittels des Teilnehmers empfangenen Audiodatei verknüpft wird. Dadurch hat z.B. ein Servicetechniker die Möglichkeit, in der Wartung sich die Aufzeichnung z.B. auf einem Service-PC anzuhören.

In einer Ausführungsform ist vorgesehen, dass das Starten der Aufzeichnung respektive das Beenden oder Stoppen der Aufzeichnung über eine Eingabe an einem berührungsempfindlichen Bildschirm durchgeführt wird.

Diese erfasste Eingabe, also den erfassten Aufzeichnenstartbefehl respektive den erfassten Aufzeichnenstoppbefehl, wird dann vom berührungsempfindlichen Bildschirm an die Aufzeichnungseinrichtung gesendet, welche ansprechend auf den entsprechenden Befehl das Aufzeichnen startet respektive beendet.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen, der durch die folgenden Ansprüche bestimmt wird.

## Patentansprüche

1. Verfahren zum Protokollieren einer ein Schienenfahrzeug (301, 403) betreffenden Information, umfassend die folgenden Schritte:
Aufzeichnen (103) einer die Information umfassenden Sprachmitteilung eines Nutzers des Schienenfahrzeugs (301, 403), Speichern (113) der aufgezeichneten Sprachmitteilung als eine Audiodatei (411) und
Senden (115) der gespeicherten Audiodatei (411) über ein drahtloses Kommunikationsnetzwerk (426) an einen vom Schienenfahrzeug (301, 403) entfernten Teilnehmer (425) des Kommunikationsnetzwerks (426),
**dadurch gekennzeichnet,**
**dass** vor dem Speichern (113) geprüft (107) wird, ob die aufgezeichnete Sprachmitteilung zumindest ein vorbestimmtes Schlüsselwort umfasst,
**dass**, wenn die aufgezeichnete Sprachmitteilung nicht das zumindest eine vorbestimmte Schlüsselwort umfasst, ein Hinweis an den Nutzer ausgegeben (109) wird, dass das zumindest eine vorbestimmte Schlüsselwort in der aufgezeichneten Sprachmitteilung fehlt.

2. Verfahren nach Anspruch 1, **dadurch gekennzeichnet,**
**dass** nach dem Ausgeben (109) des Hinweises auf eine Nutzereingabe gewartet wird, ob der Nutzer die bereits aufgezeichnete Sprachmitteilung ohne das zumindest eine vorbestimmte Schlüsselwort speichern will oder ob der Nutzer vor dem Speichern die bereits aufgezeichnete Sprachmitteilung ergänzen will,
**dass** bei Erfassung einer entsprechenden Nutzereingabe entweder eine die bereits aufgezeichnete Sprachmitteilung ergänzende Sprachmitteilung des Nutzers aufgezeichnet (111) wird, wobei die bereits aufgezeichnete und die aufgezeichnete ergänzende Sprachmitteilung als die Audiodatei (411) gespeichert werden, oder die bereits aufgezeichnete Sprachmitteilung ohne das zumindest eine vorbestimmte Schlüsselwort als die Audiodatei (411) gespeichert wird.

3. Verfahren nach Anspruch 1 oder 2, **dadurch gekennzeichnet, dass** das zumindest eine vorbestimmte Schlüsselwort aus der folgenden Gruppe von Schlüsselwörtern ausgewählt wird: Betriebsmittelkennzeichen, Ortskennzeichen, Baugruppe, Mängelcode.

4. Verfahren nach einem der vorherigen Ansprüche, **dadurch gekennzeichnet, dass** das Aufzeichnen der Sprachmitteilung erst ansprechend auf eine Erfassung (101) eines Aufzeichnenstartbefehls des Nutzers gestartet wird und/oder dass das Aufzeichnen der Sprachmitteilung erst ansprechend auf eine Erfassung (105) eines Aufzeichnenstoppbefehls des Nutzers beendet wird.

5. Verfahren nach einem der vorherigen Ansprüche, **dadurch gekennzeichnet, dass** eine Schienenfahrzeugkennung und/oder eine Nutzerkennung und/oder ein Speicherdatum der gespeicherten Audiodatei (411) an den Teilnehmer über das drahtlose Kommunikationsnetzwerk (426) gesendet werden.

6. Verfahren nach einem der vorherigen Ansprüche, **dadurch gekennzeichnet, dass** die gespeicherte Audiodatei (411) erst ansprechend auf eine Erfassung einer Bestätigung des Nutzers, dass die gespeicherte Audiodatei (411) gesendet werden soll, gespeichert wird.

7. Verfahren nach einem der vorherigen Ansprüche, **dadurch gekennzeichnet, dass** basierend auf der mittels des Teilnehmers empfangenen Audiodatei (411) ein elektronischer Arbeitszettel generiert wird.

8. Verfahren nach Anspruch 7, **dadurch gekennzeichnet, dass** der elektronische Arbeitszettel mit der empfangenen Audiodatei (411) verknüpft wird.

9. Vorrichtung (201, 401) zum Protokollieren einer ein Schienenfahrzeug (301, 403) betreffenden Information, umfassend:
eine akustische Aufzeichnungseinrichtung (201, 405) zum Aufzeichnen (103) einer die Information umfassenden Sprachmitteilung eines Nutzers des Schienenfahrzeugs (301, 403), einen elektronischen Speicher (205, 413) zum Speichern (113) der aufgezeichneten Sprachmitteilung als eine Audiodatei (411) und eine Kommunikationsschnittstelle (207, 423) zum Übermitteln (115) der gespeicherten Audiodatei (411) über ein drahtloses Kommunikationsnetzwerk (426) an einen vom Schienenfahrzeug (301, 403) entfernten Teilnehmer (425) des Kommunikationsnetzwerks (426),
**dadurch gekennzeichnet,**
**dass** vor dem Speichern (113) geprüft (107) wird, ob die aufgezeichnete Sprachmitteilung zumindest ein vorbestimmtes Schlüsselwort umfasst,
**dass**, wenn die aufgezeichnete Sprachmitteilung nicht das zumindest eine vorbestimmte Schlüsselwort umfasst, ein Hinweis an den Nutzer ausgegeben (109) wird, dass das zumindest eine vorbestimmte Schlüsselwort in der aufgezeichneten Sprachmitteilung fehlt.

10. Schienenfahrzeug (301, 403), umfassend die Vorrichtung (201, 401) nach Anspruch 9.

11. Computerprogramm, umfassend Programmcode zur Durchführung des Verfahrens nach einem der Ansprüche 1 bis 8, wenn das Computerprogramm auf einem Computer ausgeführt wird.

## Claims

1. Method for logging an item of information relating to a rail vehicle (301, 403), comprising the following steps:
recording (103) a voice message, comprising the item of information, by a user of the rail vehicle (301, 403),
saving (113) the recorded voice message as an audio file (411), and
sending (115) the saved audio file (411) via a wireless communication network (426) to a subscriber (425), remote from the rail vehicle (301, 403), of the communication network (426),
**characterized**
**in that** before the saving (113) it is checked (107) whether the recorded voice message comprises at least one predetermined key word,
**in that**, if the recorded voice message does not comprise the at least one predetermined key word, a notification is output (109) to the user stating that the at least one predetermined key word is missing from the recorded voice message.

2. Method according to Claim 1, **characterized**
**in that**, after the notification is output (109), the system waits for a user input which indicates whether the user wishes to save the already recorded voice message without the at least one predetermined key word or whether the user wishes to add to the already recorded voice message before the saving process, in that, when a corresponding user input is detected, either a voice message of the user which adds to the already recorded voice message is recorded (111), wherein the already recorded voice message and the recorded additional voice message are saved as the audio file (411), or the already recorded voice message is saved as the audio file (411), without the at least one predetermined key word.

3. Method according to Claim 1 or 2, **characterized in that** the at least one predetermined key word is selected from the following group of key words: operating material identifier, locality identifier, assembly, defect code.

4. Method according to one of the preceding claims, **characterized in that** the recording of the voice message is only started in response to detection (101) of a recording start command of the user, and/or **in that** the recording of the voice message is ended only in response to detection (105) of a recording stop command of the user.

5. Method according to one of the preceding claims, **characterized in that** a rail vehicle identifier and/or a user identifier and/or a saving date of the saved audio file (411) are/is sent to the subscriber via the wireless communication network (426).

6. Method according to one of the preceding claims, **characterized in that** the saved audio file (411) is saved only in response to detection of confirmation by the user that the saved audio file (411) is to be sent.

7. Method according to one of the preceding claims, **characterized in that** an electronic work slip is generated on the basis of the audio file (411) which has been received by means of the subscriber.

8. Method according to Claim 7, **characterized in that** the electronic work slip is linked to the received audio file (411) .

9. Device (201, 401) for logging an item of information relating to a rail vehicle (301, 403), comprising:
an acoustic recording apparatus (201, 405) for recording (103) a voice message, comprising the item of information, by a user of the rail vehicle (301, 403), an electronic memory (205, 413) for saving (113) the recorded voice message as an audio file (411), and a communication interface (207, 423) for transferring (115) the saved audio file (411) via a wireless communication network (426) to a subscriber (425), remote from the rail vehicle (301, 403), of the communication network (426),
**characterized**
**in that** before the saving (113) it is checked (107) whether the recorded voice message comprises at least one predetermined key word,
**in that**, if the recorded voice message does not comprise the at least one predetermined key word, a notification is output (109) to the user stating that the at least one predetermined key word is missing from the recorded voice message.

10. Rail vehicle (301, 403) comprising the device (201, 401) according to Claim 9.

11. Computer program comprising program code for carrying out the method according to one of Claims 1 to 8 when the computer program is run on a computer.

## Revendications

1. Procédé permettant d'enregistrer une information concernant un véhicule ferroviaire (301, 403), comprenant les étapes consistant à :
enregistrer (103) un message vocal d'un utilisateur du véhicule ferroviaire (301, 403), contenant les informations,
mémoriser (113) le message vocal enregistré, sous forme de fichier audio (411), et
envoyer (115) le fichier audio (411) enregistré à un abonné (425) du réseau de communication (426) se trouvant à distance du véhicule ferroviaire (301, 403), par l'intermédiaire d'un réseau de communication (426) sans fil,
**caractérisé en ce que**
vérifier (107) avant la mémorisation (113) afin de déterminer si le message vocal enregistré comprend au moins un mot-clé prédéterminé,
si le message vocal enregistré ne comprend pas le ou les mots-clés prédéterminés, une indication est fournie en sortie (109) à l'utilisateur que le ou les mots-clés prédéterminés sont manquants dans le message vocal enregistré.

2. Procédé selon la revendication 1, **caractérisé en ce que**, après la sortie de l'indication (109) d'une entrée d'utilisateur, une attente est effectuée afin de savoir si l'utilisateur souhaite mémoriser le message vocal déjà enregistré sans le au moins un mot-clé prédéterminé ou si l'utilisateur souhaite compléter le message vocal déjà enregistré avant la mémorisation,
lorsqu'une entrée d'utilisateur correspondante est détectée, soit un message vocal de l'utilisateur complétant le message vocal déjà enregistré est enregistré (111), le message vocal déjà enregistré et le message vocal complétant enregistré étant stockés en tant que fichier audio (411), soit le message vocal déjà enregistré est stocké en tant que fichier audio (411) sans le ou les mots-clés prédéterminés.

3. Procédé selon la revendication 1 ou 2, **caractérisé en ce que** le au moins un mot clé prédéterminé est choisi dans le groupe de mots-clés suivant : indicateur d'équipement, indicateur d'emplacement, assemblage, code défaut.

4. Procédé selon l'une quelconque des revendications précédentes, **caractérisé en ce que** l'enregistrement du message vocal n'est démarré qu'en réponse à une détection (101) d'un ordre de démarrage d'enregistrement de l'utilisateur et/ou **en ce que** l'enregistrement du message vocal n'est terminé qu'en réponse à une détection (105) d'un ordre d'arrêt d'enregistrement de l'utilisateur.

5. Procédé selon l'une quelconque des revendications précédentes, **caractérisé en ce qu'**un identificateur de véhicule ferroviaire et/ou un identificateur d'utilisateur et/ou une date de mémorisation du fichier audio (411) enregistré sont envoyés à l'abonné par l'intermédiaire du réseau de communication sans fil (426).

6. Procédé selon l'une des revendications précédentes, **caractérisé en ce que** le fichier audio (411) enregistré n'est mémorisé qu'en réponse à une reconnaissance par l'utilisateur que le fichier audio (411) enregistré doit être transmis.

7. Procédé selon l'une des revendications précédentes, **caractérisé en ce qu'**une fiche de travail électronique est générée sur la base du fichier audio (411) reçu par l'abonné.

8. Procédé selon la revendication 7, **caractérisé en ce que** le bon de travail électronique est lié au fichier audio (411) reçu.

9. Appareil (201, 401) permettant d'enregistrer des informations relatives à un véhicule ferroviaire (301, 403), comprenant :
un dispositif d'enregistrement acoustique (201, 405) permettant d'enregistrer (103) un message vocal contenant les informations d'un utilisateur du véhicule ferroviaire (301, 403),
une mémoire électronique (205, 413) permettant de mémoriser (113) le message vocal enregistré, sous forme de fichier audio (411) et une interface de communication (207, 423) permettant d'envoyer (115) le fichier audio (411) enregistré à un abonné (425) du réseau de communication (426) se trouvant à distance du véhicule ferroviaire (301, 403), par l'intermédiaire d'un réseau de communication (426) sans fil,
**caractérisé en ce que**
avant de mémoriser (113) vérifier (107) si le message vocal enregistré comporte au moins un mot-clé prédéterminé,
si le message vocal enregistré ne comprend pas le au moins un mot-clé prédéterminé, une indication est fournie en sortie (109) à l'utilisateur que le au moins un mot-clé prédéterminé est manquant dans le message vocal enregistré.

10. Véhicule ferroviaire (301, 403) comprenant l'appareil (201, 401) de la revendication 9.

11. Programme informatique comprenant un code de programme permettant d'exécuter le procédé selon l'une quelconque des revendications 1 à 8, lorsque le programme informatique est exécuté sur un ordinateur.
